# EUROPEAN PATENT APPLICATION

(11) **EP 1 768 430 A1**
(43) Date of publication of application: **28.03.2007**
(21) Application number: 05258021.4
(22) Date of filing: 23.12.2005
(51) Int. Cl.: H04Q 7/32

(54) **Mobile multimode terminal and radio base station for performing protocol conversion**

(30) Priority: 21.09.2005 JP 2005274785
(71) Applicant: FUJITSU LIMITED, Kawasaki-shi, Kanagawa 211-8588 (JP)
(72) Inventor: Nitta, Daisuke, Kawasaki-shi Kanagawa 211-8588 (JP); Kumagai, Tomonori, Kawasaki-shi Kanagawa 211-8588 (JP); Kobayashi, Kazunari, Kawasaki-shi Kanagawa 211-8588 (JP)
(74) Representative: Stebbing, Timothy Charles

(57) **Abstract**

A radio communication terminal including first transmission/reception means (711) for transmitting and receiving first communication data which can be communicated by a first communication protocol, and communication data input/output means (73) for inputting and outputting the first communication data, further comprises second transmission/reception means (721) for transmitting and receiving second communication data which can be communicated by a second communication protocol different from the first communication protocol, and protocol conversion means (723) for converting between the first communication data and the second communication data and vice-versa. The communication data input/output means (73) outputs the first communication data which has been received by the second transmission/reception means (721) as the second communication data and has been converted from the second communication data into the first communication data by the protocol conversion means (723), and the second transmission/reception means (721) transmits the second communication data which has been input to the communication data input/output means (73) as the first communication data and has been converted from the first communication data into the second communication data by the protocol conversion means (723). Thereby, a radio communication terminal or the like can be used in areas which are incompatible with HSDPA (or W-CDMA communication), whilst reducing the cost and maintaining quality of service at an acceptable level.

## Description

The present invention relates to a technique of hand-over in a mobile communication system, particularly to a radio communication terminal, a radio base transceiver station, a method of controlling communication and a program product for controlling communication.

Convenience for a user who enters and leaves a plurality of areas in which different communication methods are employed can be improved by a configuration in which one radio communication terminal is used which is compatible with communication methods employed in respective areas. However, the radio communication terminal and a radio base transceiver station have to manage switching of the communication method.

Japanese Patent Application Publication No. 2001-326975 discloses a technique in which when a communication terminal is outside a service area with respect to a communication method which is currently employed, a user of the terminal is notified of the fact and is prompted to select an alternative communication method, and the communication method can be switched by simple operations.

Japanese Patent Application Publication No. 2002-77294 discloses a technique in which a communication method is switched to an optimum method in accordance with various factors which dynamically change such as a data communication channel, a capacity of devices on a receiving side and a load on them, a frequency of updating or referring to data or the like.

Japanese Patent Application Publication No. 2003-284150 discloses a composite radio communication system comprising a first radio communication system, a second radio communication system which is different from the first radio communication system and radio communication terminals that can operate on the first and second radio communication systems.

Japanese Patent Application Publication No. 2004-289373 discloses a technique in which in the case where it is determined that the communication method can be switched to another method, a search is conducted for a communication station which can perform radio communications with the terminal based on the communication method other than the communication method which is currently employed, and if there is a communication station such as above, communication units are switched from the currently used unit e.g., the communication unit in accordance with the IEEE802.11b protocol to another communication unit e.g., the communication unit in accordance with the IEEE802.11a protocol instantaneously such that the line is not disconnected.

Today, performance in the mobile communication system has been enhanced, especially with the realization of HSDPA (High-Speed Downlink Packet Access), in which functions of the W-CDMA (Wideband-Code Division Multiple Access) method are extended and high speed downlink packet communication is realized.

However, if the radio communication terminal and the radio base transceiver station (Node B = BTS) are to be applied to HSDPA, newly developed programs and hardware have to be applied to RNC (Radio Network Controller) equipment and Node B. Thus, there is a problem that development of a service based on HSDPA requires enormous capital investment, and areas where a cost-benefit performance is low are likely to remain incompatible with HSDPA until the price for each HSDPA compatible device (radio communication terminal, radio base transceiver station and the like) is low.

To the areas which are incompatible with HSDPA such as above, a communication method has to be applied, by which the cost for constructing the system is reduced while quality of service is maintained at an acceptable level. It is also desired that the system be a system in which resources of existing infrastructure are utilized the most efficiently by diverting the existing W-CDMA system maximally.

It is also desired that the system be compatible with not only HSDPA, but also a transport channel such as DCH (Dedicated Channel) and the like which is specified by the conventional 3GPP.

In the situation as above, a new communication method, WiMAX (Worldwide Interoperability for Microwave Access [IEEE 802.16a]) is gathering interest. This WiMAX method is for a wireless network for a wide area covering metropolises (large city areas), in a technical field which is referred to as Wireless MAN (Metropolitan Area Networks [IEEE 802.16]), and features a communication speed of 75Mbps at most and a cell size of 50Km at most, and the standardization of WiMAX has already started.

Accordingly, in the three points below, mutual utilization is required between HSDPA and WiMAX in the future, besides the problem occurring upon developing services based on HSDPA as above.
(1) Means for switching communication methods which is to be employed when in the future a terminal compatible with a plurality of infrastructures for communications such as HSDPA, WiMAX and the like starts to be used commonly;
(2) Means for mutual utilization between HSDPA and WiMAX in the case where a carrier which has started a regular HSDPA service utilizes the infrastructure for WiMAX as means for increasing the number of terminals which can be connected to the network at once;
(3) Means for switching, as a tool for mutual use between a carrier providing the HSDPA service and a carrier providing a communication service based on WiMAX.

In view of the above situation, it is desirable to provide a radio communication terminal, a radio base transceiver station, a method of controlling communication and a program product for controlling communication by which cost is reduced while quality of service is maintained at an acceptable level in HSDPA incompatible areas.

It is further desirable to divert the existing W-CDMA system maximally and to realize the most efficient utilization of the resource of infrastructure of the existing W-CDMA system upon realizing the above radio communication terminal, radio base transceiver station, method of controlling communication and program product for controlling communication.

In order to mitigate the above problems, the present invention employs the configuration as below.

According to one aspect of the present invention, there is provided a radio communication terminal including first transmission/reception means for transmitting and receiving first communication data (in a form) which can be communicated by a first communication protocol, and communication data input/output means for inputting and outputting the first communication data, characterized by comprising second transmission/reception means for transmitting and receiving second communication data (in a form) which can be communicated by a second communication protocol different from the first communication protocol, and protocol conversion means for converting between the first communication data and the second communication data and vice-versa, in which the communication data input/output means is operable to output the first communication data which has been received by the second transmission/reception means as the second communication data and has been converted from the second communication data into the first communication data by the protocol conversion means, and the second transmission/reception means is operable to transmit the second communication data which has been input to the communication data input/output means as the first communication data and has been converted from the first communication data into the second communication data by the protocol conversion means.

In the radio communication terminal according to the above aspect, it is desirable that the first communication protocol is a communication protocol based on W-CDMA (Wideband-Code Division Multiple Access) method (including HSDPA (High-Speed Downlink Packet Access) communication) specified by 3GPP (3rd Generation Partnership Project), and the second communication protocol is a communication protocol for WiMAX (Worldwide Interoperability for Microwave Access [IEEE 802.16a]).

According to another aspect of the present invention, there is provided a base transceiver station characterized by comprising first user data transmission/reception means for transmitting and receiving first communication data which can be communicated by a first communication protocol to/from a radio base transceiver station which can perform communication by the first communication protocol, second user data transmission/reception means for transmitting and receiving second communication data which can be communicated by a second communication protocol different from the first communication protocol to/from a radio communication terminal which can perform communication by the second communication protocol, and protocol conversion means for converting between the first communication data and the second communication data and vice-versa.

According to another aspect of the present invention, there is provided a method of controlling communication which is employed by a radio communication terminal including first transmission/reception means for transmitting and receiving first communication data which can be communicated by a first communication protocol, and communication data input/output means for inputting and outputting the first communication data, the method comprising receiving second communication data which can be communicated by a second communication protocol different from the first communication protocol, converting the received second communication data into the first communication data, and outputting the converted first communication data by the communication data input/output means.

According to another aspect of the present invention, there is provided a method of controlling communication which is employed by a radio communication terminal including first transmission/reception means for transmitting and receiving first communication data which can be communicated by a first communication protocol, and communication data input/output means for inputting and outputting the first communication data, the method comprising inputting the first communication data by using the communication data input/output means, converting the input first communication data into second communication data which can be communicated by a second communication protocol different from the first communication protocol, and transmitting the converted second communication data.

According to another aspect of the present invention, there is provided a method of controlling communication which is employed by a radio base transceiver station which can communicate, by a first communication protocol, first communication data which can be communicated by the first communication protocol, the method comprising receiving the first communication data from a radio base transceiver station, converting the received first communication data into second communication data which can be communicated by a second communication protocol different from the first communication protocol, and transmitting the converted second communication data to a radio communication terminal which can perform communication by the second communication protocol.

According to another aspect of the present invention, there is provided a method of controlling communication which is employed by a radio base transceiver station which can communicate, by a first communication protocol, first communication data which can be communicated by the first communication protocol, the method comprising receiving second communication data which can be communicated by a second communication protocol different from the first communication protocol from a radio communication terminal which can perform communication by the second communication protocol, converting the received second communication data into the first communication data, and transmitting the converted first communication data to a radio base transceiver station which can perform communication by the first communication protocol.

According to another aspect of the present invention, there is provided a computer executable program product for controlling communication, having program code means for causing a radio communication terminal, including first transmission/reception means for transmitting and receiving first communication data which can be communicated by a first communication protocol and communication data input/output means for inputting and outputting the first communication data, to execute a step of receiving second communication data which can be communicated by a second communication protocol different from the first communication protocol, a step of converting the received second communication data into the first communication data, and a step of outputting the converted first communication data by the communication data input/output means.

According to another aspect of the present invention, there is provided a computer executable program product for controlling communication, characterized by causing a radio communication terminal, including first transmission/reception means for transmitting and receiving first communication data which can be communicated by a first communication protocol and communication data input/output means for inputting and outputting the first communication data, to execute a step of inputting the first communication data by using the communication data input/output means, a step of converting the input first communication data into second communication data which can be communicated by a second communication protocol different from the first communication protocol, and a step of transmitting the converted second communication data.

According to another aspect of the present invention, there is provided a computer executable program product for controlling communication, characterized by causing a radio base transceiver station which can communicate, by a first communication protocol, first communication data which can be communicated by the first communication protocol, to execute a step of receiving first communication data from a radio base transceiver station, a step of converting the received first communication data into second communication data which can be communicated by a second communication protocol different from the first communication protocol, and a step of transmitting the converted second communication data to a radio communication terminal which can perform communication by the second communication protocol.

Reference will now be made, by way of example only, to the accompanying drawings, in which:
Fig. 1 shows an entire configuration of a mobile communication system to which the present invention is applied;
Fig. 2 is a block diagram for explaining functions of a radio network controller (RNC);
Fig. 3 is a block diagram for explaining functions of a radio base station (BS);
Fig. 4 is a block diagram for explaining functions of a radio communication terminal (UE);
Fig. 5 explains a state when the radio communication terminal (UE) is in a conventional HSDPA compatible area based on a W-CDMA system;
Fig. 6 explains a state when the radio communication terminal (UE) moves from the conventional HSDPA compatible area based on the W-CDMA system into a WiMAX compatible area;
Fig. 7 explains the state when the radio communication terminal (UE) is in the WiMAX compatible area;
Fig. 8 explains the state when the radio communication terminal (UE) moves from the WiMAX compatible area into the conventional HSDPA compatible area based on the W-CDMA system;
Fig. 9 explains protocol conversion between a 3GPP protocol and a WiMAX protocol (the case of radio base transceiver station (Node-B) based on W-CDMA in downlink);
Fig. 10 explains the protocol conversion between the 3GPP protocol and the WiMAX protocol (the case of radio base station (BS) for WiMAX in downlink);
Fig. 11 explains the protocol conversion between the 3GPP protocol and the WiMAX protocol (the case of radio base transceiver station (Node-B) based on W-CDMA in uplink);
Fig. 12 explains the protocol conversion between the 3GPP protocol and the WiMAX protocol (the case of radio base station (BS) for WiMAX in uplink);
Fig. 13 is a block diagram for explaining a conversion between a HS-DSCH signal and a WiMAX signal and a conversion between a DCH signal and a WiMAX signal;
Fig. 14 shows elements extracted from a RADIO LINK RECONFIGURATION PREPARE message and a RADIO LINK RECONFIGURATION READY message which is the response to the RADIO LINK RECONFIGURATION PREPARE message (representative elements only are shown);
Fig. 15 shows "HS-DSCH physical layer category" specified in 3GPP TS25.306 Ver.5.8.0;
Fig. 16 is a table in the case when category 10 in HS-DSCH physical layer category is set to a wireless communication terminal (UE) which is compatible with WiMAX;
Fig. 17 is a table when category13 and category14 in HS-DSCH physical layer category are newly set to a wireless communication terminal (UE) which is compatible with WiMAX;
Fig. 18 shows a sequence to be followed when the radio communication terminal (UE) moves from the HSDPA compatible area into the WiMAX compatible area;
Fig. 19 shows a sequence to be followed when the radio communication terminal (UE) moves from the WiMAX compatible area into the HSDPA compatible area; and
Fig. 20 shows a sequence to be followed when the radio communication terminal (UE) switches communication methods from a DCH method to a HS-DSCH method in the WiMAX compatible area.

Hereinafter, embodiments to which the present invention is applied are explained by referring to the drawings.

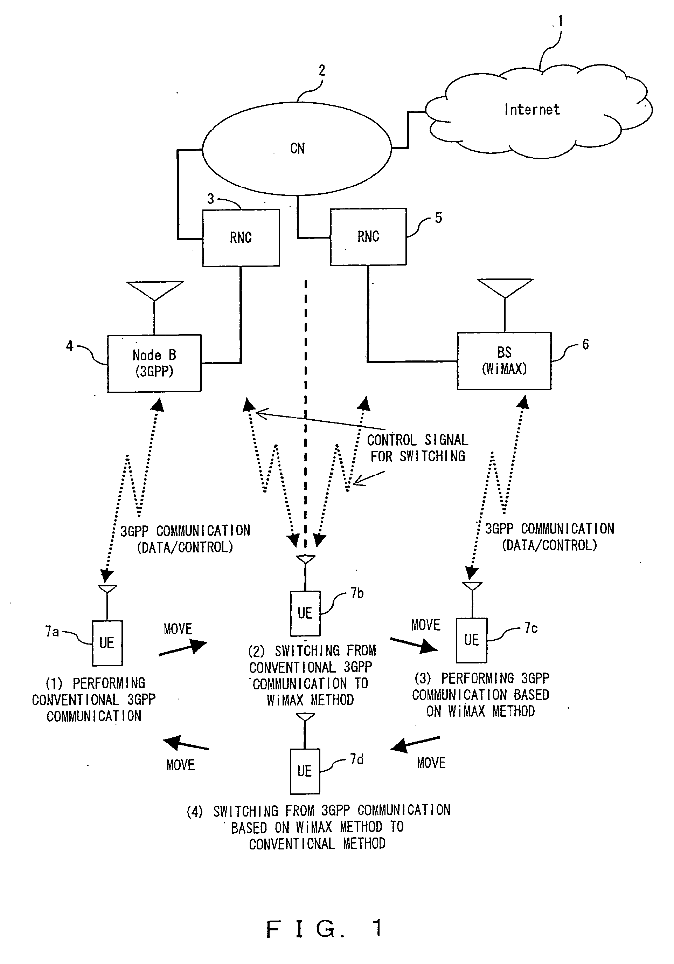

Fig. 1 shows an entire configuration of a mobile communication system to which the present invention is applied.

In Fig. 1, the mobile communication system to which the present invention is applied comprises a core network (CN) 2 which complies with the 3GPP (3rd Generation Partnership Project) protocol and which is connected to the Internet 1, radio network controllers (RNCs) 3 and 5 which are in compliance with the 3GPP protocol and which are connected to the core network 2, a radio base transceiver station (Node-B) 4 based on W-CDMA which is in compliance with the 3GPP protocol and which is connected to the radio network controller (RNC) 3, a radio base station (BS) 6 based on WiMAX, and radio communication terminals (UEs) 7 (7a to 7d) which are compatible with W-CDMA and WiMAX.

In the above, the radio communication terminal (UE) 7a is the radio communication terminal (UE) 7 in a state of performing conventional communications in accordance with the 3GPP protocol. The radio communication terminal (UE) 7b is the radio communication terminal (UE) 7 in a state of switching the communication protocol from conventional communication in accordance with the 3GPP protocol to communication based on WiMAX which is in accordance with the 3GPP protocol. The radio communication terminal (UE) 7c is the radio communication terminal (UE) 7 in a state of performing communications based on WiMAX in accordance with the 3GPP protocol. The radio communication terminal (UE) 7d is the radio communication terminal (UE) 7 in a state of switching the communication protocol from the communication based on WiMAX which is in accordance with the 3GPP protocol to the conventional communication which is also in accordance with the 3GPP protocol.

Additionally, the conventional communication in accordance with the 3GPP protocol and the communication based on WiMAX in accordance with the 3GPP protocol, respectively, include communications based on HSDPA.

Further, the radio base transceiver station (Node-B) 4 based on W-CDMA and the radio base station (BS) 6 based on WiMAX can be covered by one and the same radio network controller 3 (RNC) (or 5).

Hereinafter, each respective apparatus will be explained schematically.

It is assumed that the radio base transceiver station (Node-B) 4 is compatible with the communication based on HSDPA in accordance with 3GPP when the radio base transceiver station (Node-B) 4 performs communication based on HSDPA. However it is assumed that the radio base transceiver station (Node-B) 4 outputting signals (e.g. radio waves) is incompatible with HSDPA in areas which are incompatible with W-CDMA, which will be described later. The radio base transceiver station (Node-B) 4 switches output destinations to which signals output by the radio network controller (RNC) 3 (or 5) are to be output among the radio communication terminals (UE) 7 in accordance with which is selected by the core network (CN) 2 between W-CDMA and WiMAX, at the timing of switching between W-CDMA and WiMAX.

The radio base station (BS) 6 converts data output by the radio network controller 3 based on W-CDMA according to prescribed conversion processes, and transmits, based on WiMAX, the converted data to the radio communication terminal 7.

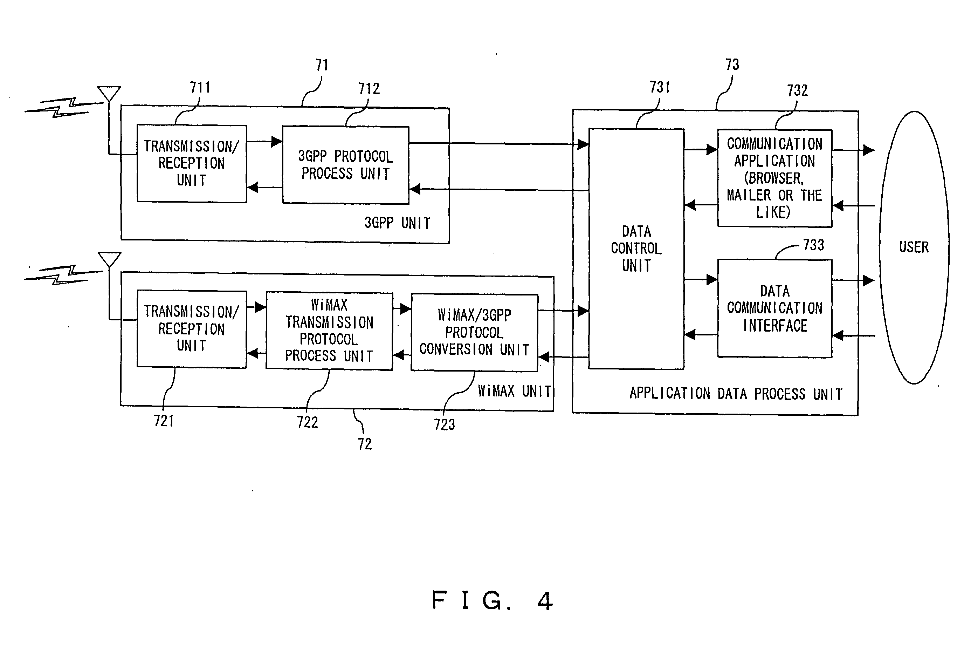

The radio communication terminal 7 has a fundamental configuration of a mobile station based on W-CDMA, and additionally comprises a transmission/reception unit 711 based on W-CDMA in a transmission part (see Fig. 4) and a transmission/reception unit 721 based on WiMAX (see Fig. 4).

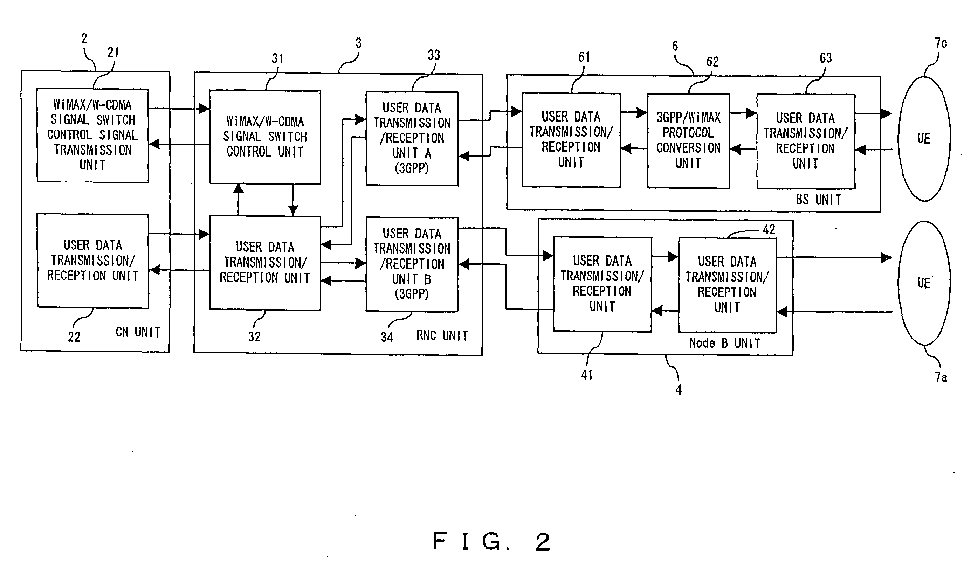

Fig. 2 is a block diagram for explaining functions of the radio network controller (RNC).

In Fig. 2, the core network (CN) 2 comprises a WiMAX/W-CDMA signal switch control signal transmission unit 21 for transmitting to the radio network controller (RNC) 3 a control signal for switching between a WiMAX signal and a W-CDMA signal, and a user data transmission/reception unit 22 for transmitting and receiving user data to/from the radio communication terminals (UEs) 7 via the radio network controller (RNC) 3 and the radio base transceiver station (Node-B) 4/radio base station (BS) 6.

The radio network controller (RNC) 3 comprises a WiMAX/W-CDMA signal switch control unit 31 for controlling switching between communication based on WiMAX and communication based on W-CDMA in accordance with the control signal transmitted from the core network (CN) 2, a user data transmission/reception unit 32 for transmitting and receiving the user data transmitted from the radio communication terminal (UE) 7 to/from the core network (CN) 2, for transmitting and receiving the user data to/from a user data transmission/reception unit B (3GPP) 34 in the case when communication based on W-CDMA with the radio communication terminal (UE) 7a via the radio base transceiver station (Node-B) 4 is to be performed, and for transmitting and receiving the user data to/from a user data transmission/reception unit A (WiMAX) 33 in the case when communication based on WiMAX with the radio communication terminal (UE) 7c via the radio base station (BS) 6 is to be performed. The user data transmission/reception unit A (WiMAX) 33 is for performing communication based on WiMAX with the radio communication terminal (UE) 7c via the radio base station (BS) 6, and the user data transmission/reception unit B (3GPP) 34 is for performing communication based on W-CDMA with the radio communication terminal (UE) 7a via the radio base transceiver station (Node-B) 4, thereby, the output destinations to which user data output by the radio network controller (RNC) 3 is to be output among the radio communication terminals (UE) 7 are switched in accordance with which is selected by the core network (CN) 2 between W-CDMA and WiMAX, at the timing of switching between W-CDMA and WiMAX.

The radio base transceiver station (Node-B) 4 comprises a user data transmission/reception unit 41 for transmitting and receiving, based on W-CDMA, the user data to/from the radio network controller (RNC) 3, and a user data transmission/reception unit 42 for transmitting and receiving, based on W-CDMA, the user data to/from the radio communication terminal (UE) 7a. The radio base station (BS) 6 comprises a user data transmission/reception unit 61, a 3GPP/WiMAX protocol conversion unit 62 and a user data transmission/reception unit 63. The detail of the radio base station (BS) 6 will be explained later.

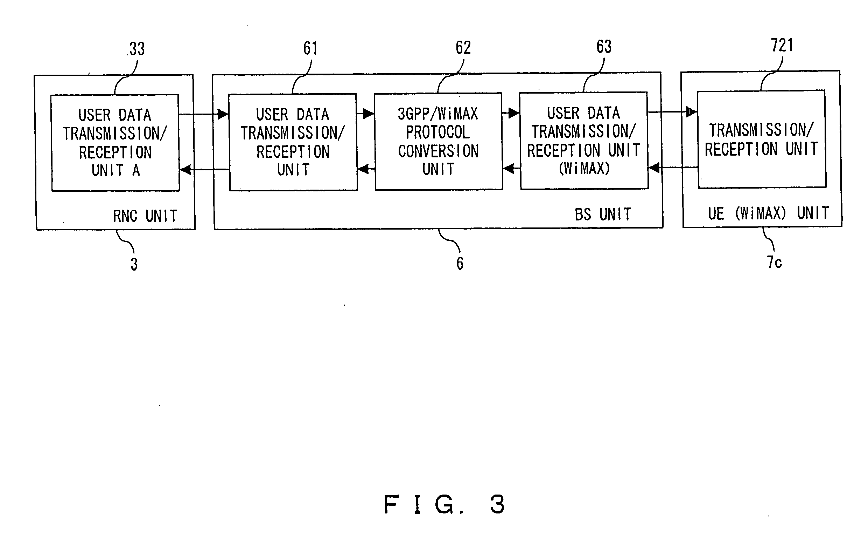

Fig. 3 is a block diagram for explaining functions of the radio base station (BS).

In Fig. 3, the radio base station (BS) 6 comprises the user data transmission/reception unit 61 for transmitting and receiving, based on WiMAX, the user data to/from the radio network controller (RNC) 3, the 3GPP/WiMAX protocol conversion unit 62 for converting between data in the 3GPP protocol and that in the WiMAX protocol and vice-versa, and the user data transmission/reception unit 63 for transmitting and receiving, based on WiMAX, the user data to/from the radio communication terminal (UE) 7c.

The above configuration assumes that the conventional base station for WiMAX employs IPv4/v6 or the like as the interface with the network system side, however, the radio base station (BS) 6 for WiMAX which is employed in the present embodiment comprises the user data transmission/reception unit 61 as an interface which allows the transmission and reception of data output from the radio network controller (RNC) 3 based on W-CDMA. The radio base station (BS) 6 also comprises the 3GPP/WiMAX protocol conversion unit 62 with a function of converting the received data which is based on W-CDMA and which is output from the radio network controller (RNC) 3 according to prescribed conversion processes, and further comprises the user data transmission/reception unit 63 with a function of transmitting, based on WiMAX, the converted data to the radio communication terminal (UE) 7c. Additionally, the 3GPP/WiMAX protocol conversion unit 62 converts data which is transmitted from the radio communication terminal (UE) 7c and which is based on WiMAX according to predetermined conversion processes which have the function opposite to that in the above conversion processes. The user data transmission/reception unit 63 has a function of outputting the converted data to the radio network controller (RNC) 3 based on W-CDMA.

Fig. 4 is a block diagram for explaining functions of the radio communication terminal (UE).

In Fig. 4, the radio communication terminal (UE) 7 comprises a 3GPP unit 71 including the transmission/reception unit 711 and a 3GPP protocol process unit 712, a WiMAX unit 72 including the transmission/reception unit 721, a WiMAX transmission protocol process unit 722 and a WiMAX/3GPP protocol conversion unit 723, and an application data process unit 73 including a data control unit 731, a communication application 732 and a data communication interface 733.

The radio communication terminal (UE) 7 employed in the present embodiment has a fundamental configuration of a mobile station based on W-CDMA, and additionally comprises a transmission/reception unit 711 based on W-CDMA in a transmission part and a transmission/reception unit 721 based on WiMAX.

The signal transmitted from the radio base transceiver station (Node-B) 4 based on W-CDMA is received by the transmission/reception unit 711 for 3GPP, decoded to application data (Layer 3 signal) by the 3GPP protocol process unit 712, and the decoded data is transferred to the data control unit 731. Thereafter, the data is provided to the user via a communication application (browser, mailer or the like) 732, or is provided to the user via an external data communication device connected via the data communication interface 733.

The signal transmitted from the radio base station (BS) 6 based on WiMAX is received by the transmission/reception unit 721 for WiMAX, decoded to application data for the 3GPP protocol (Layer 3 signal) via the WiMAX transmission protocol process unit 722 and the WiMAX/3GPP protocol conversion unit 723 for converting between data in the WiMAX protocol and that in the 3GPP protocol and vice-versa, and the decoded data is transferred to the data control unit 731. Thereafter, the data is provided to the user via the communication application 732, or is provided to the user via an external data communication device connected via the data communication interface 733.

Next, an explanation will be given about operations of the entire mobile communication system, specifically, the operations of the entire mobile communication system at the time the radio communication terminal (UE) 7 moves from a conventional HSDPA compatible area 40 based on W-CDMA into a WiMAX compatible area 60, and again moves into the HSDPA compatible area 40 based on W-CDMA. Additionally, the operations of the entire mobile communication system at the time the radio communication terminal (UE) 7 moves from an area for conventional communication based on the W-CDMA system (such as DCH or the like) into the WiMAX compatible area, and again moves into the area for conventional communication based on the W-CDMA system (such as DCH or the like) can be explained by interpreting "HSDPA" as the conventional communication based on the W-CDMA system (such as DCH or the like).

The radio communication terminal (UE) 7 in the mobile communication system to which the present embodiment is applied is in any of four states of (1) a state of being in the conventional HSDPA compatible area 40 based on the W-CDMA system, (2) a state of moving from the conventional HSDPA compatible area 40 based on the W-CDMA system into the WiMAX compatible area 60, (3) a state of being in the WiMAX compatible area 60, and (4) a state of moving from the WiMAX compatible area 60 into the conventional HSDPA compatible area 40 based on W-CDMA.

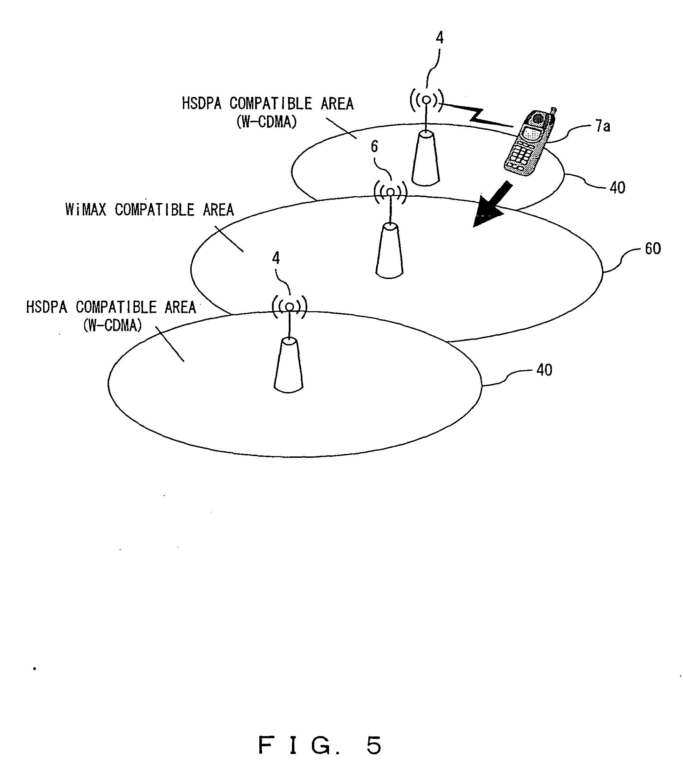

Fig. 5 explains a state when the radio communication terminal (UE) is in the conventional HSDPA compatible area based on the W-CDMA system.

In the state when the radio communication terminal (UE) 7 (7a) is in the conventional HSDPA compatible area 40 based on the W-CDMA system as shown in Fig. 5, the radio communication terminal (UE) 7 (7a) performs conventional communications based on HSDPA.

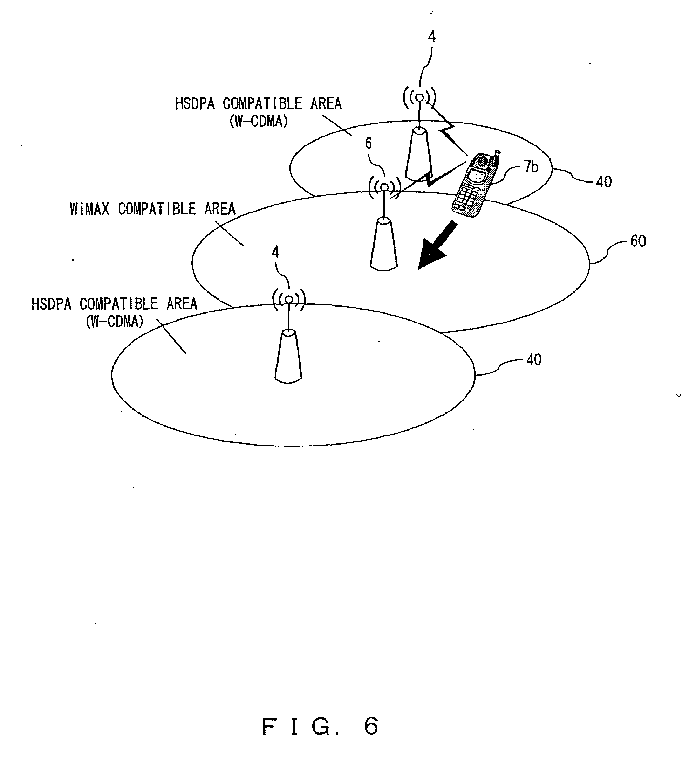

Fig. 6 explains a state when the radio communication terminal (UE) moves from the conventional HSDPA compatible area 40 based on the W-CDMA system into the WiMAX compatible area.

In the state when the radio communication terminal (UE) 7 (7b) moves from the conventional HSDPA compatible area 40 based on the W-CDMA system into the WiMAX compatible area 60 as shown in Fig. 6, the WiMAX compatible area 60 replaces the conventional HSDPA compatible area 40 based on the W-CDMA system as the cell including the radio communication terminal (UE) 7 (7b) .

In other words, channels are switched when the radio communication terminal (UE) 7 (7b) moves from the cell in the HSDPA compatible area 40 into the WiMAX compatible area 60. Upon this, the radio communication terminal (UE) 7 (7b) which is compatible with WiMAX receives the signal transmitted from the radio base station (BS) 6 for WiMAX, responds to the radio base station (BS) 6 for WiMAX, and normally completes the switch. However, in the case of a terminal (UE) which is incompatible with WiMAX, the terminal can not receive the signal transmitted from the radio base station (BS) 6 for WiMAX, and thus the terminal can not respond to the radio base station (BS) 6 for WiMAX. In this case, a corresponding timer expires and the communication based on WiMAX is terminated. Accordingly, the UE which is incompatible with WiMAX does not perform communication in the WiMAX compatible area 60.

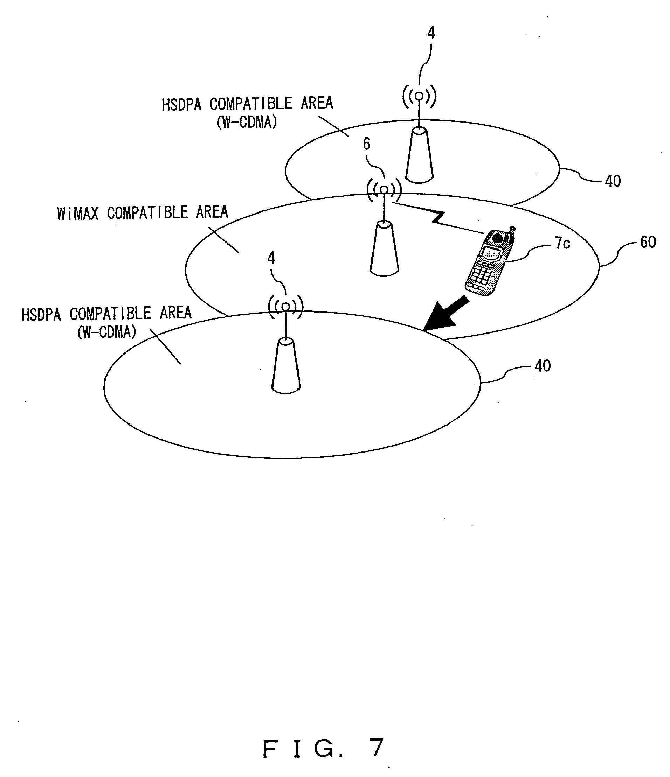

Fig. 7 explains the state when the radio communication terminal (UE) is in the WiMAX compatible area.

In the state when the radio communication terminal (UE) 7c is in the WiMAX compatible area 60, the radio base station (BS) 6 for WiMAX transmits and receives data to/from the radio communication terminal (UE) 7c while converting the 3GPP specifications based on the HSDPA protocol into the specifications based on the WiMAX protocol according to prescribed conversion regulations. The radio communication terminal (UE) 7c also transmits and receives data to/from the radio base station (BS) 6 for WiMAX while converting the 3GPP specifications based on the HSDPA protocol into the specifications based on the WiMAX protocol according to prescribed conversion regulations.

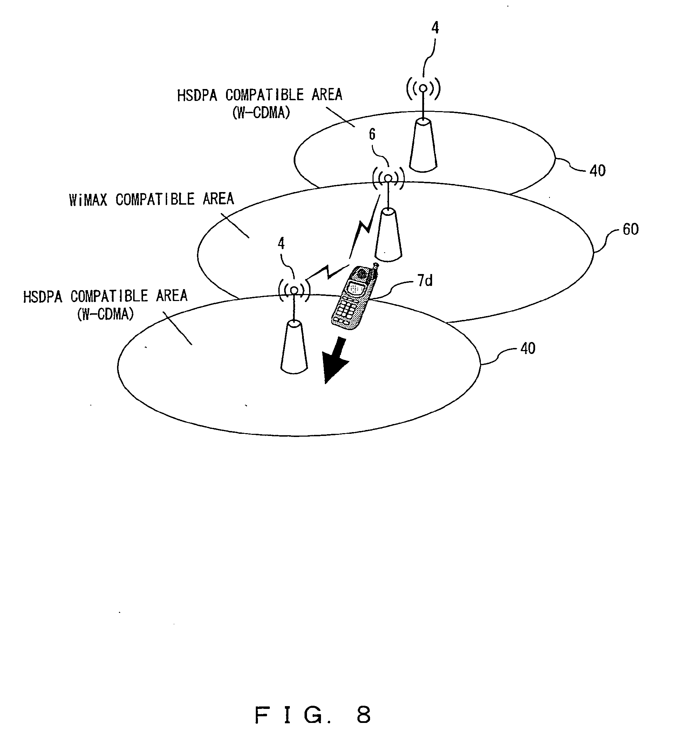

Fig. 8 explains the state when the radio communication terminal (UE) moves from the WiMAX compatible area into the conventional HSDPA compatible area based on the W-CDMA system.

In the state when the radio communication terminal (UE) 7d moves from the WiMAX compatible area 60 into the conventional HSDPA compatible area 40 based on the W-CDMA system, the radio communication terminal (UE) 7d switches its communication method from the WiMAX method to the HSDPA method.

In other words, channels are switched when the radio communication terminal (UE) 7 (7d) moves from the cell in the WiMAX compatible area 60 to the HSDPA compatible area 40. Upon this, the radio communication terminal (UE) 7 (7d) which is compatible with WiMAX receives the signal for W-CDMA transmitted from the radio base transceiver station (Node-B) 4, responds to the radio base transceiver station (Node-B) 4, and normally completes the switch from the WiMAX method. Additionally, in the case of the terminal (UE) which is incompatible with WiMAX, the terminal receives the signal for W-CDMA transmitted from the radio base transceiver station (Node-B) 4, responds to the radio base transceiver station (Node-B) 4, and normally starts communication based on W-CDMA.

Next four specific methods for implementing the above switch are explained below.
(1) Method in which the radio base station (BS) 6 as the WiMAX device and the radio communication terminal (UE) 7 which is compatible with WiMAX convert between the 3GPP protocol and the WiMAX protocol and vice-versa;
(2) Method in which the radio communication terminal (UE) 7 which is compatible with WiMAX moves from the HSDPA compatible area 40 based on the W-CDMA system into the WiMAX compatible area 60;
(3) Method in which the radio communication terminal (UE) 7 which is compatible with WiMAX moves from the WiMAX compatible area 60 into the conventional HSDPA compatible area 40 based on the W-CDMA system;
(4) Method in which the radio communication terminal (UE) 7 which is compatible with WiMAX switches communication methods from the DCH method to the HS-DSCH method in the WiMAX compatible area 60.

First, the method (1) will be explained, in which the radio base station (BS) 6 as the WiMAX device and the radio communication terminal (UE) 7 which is compatible with WiMAX convert between the 3GPP protocol and the WiMAX protocol and vice-versa.

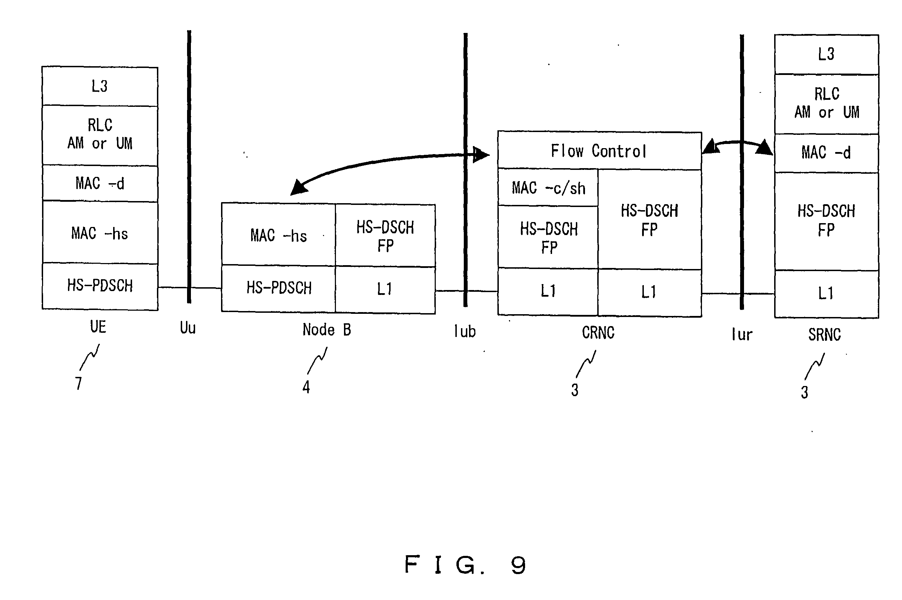

Fig. 9 to Fig. 12 explain the protocol conversion between the 3GPP protocol and the WiMAX protocol.

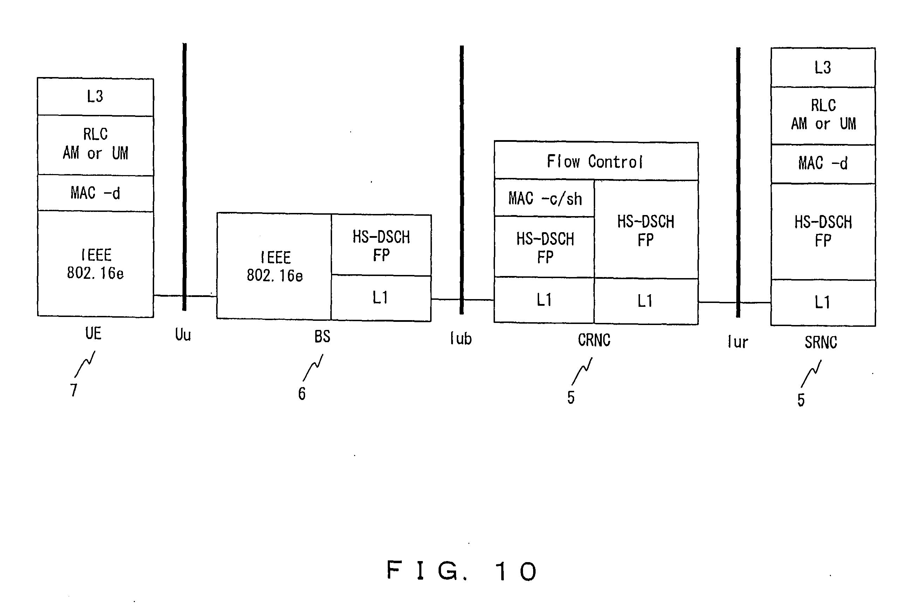

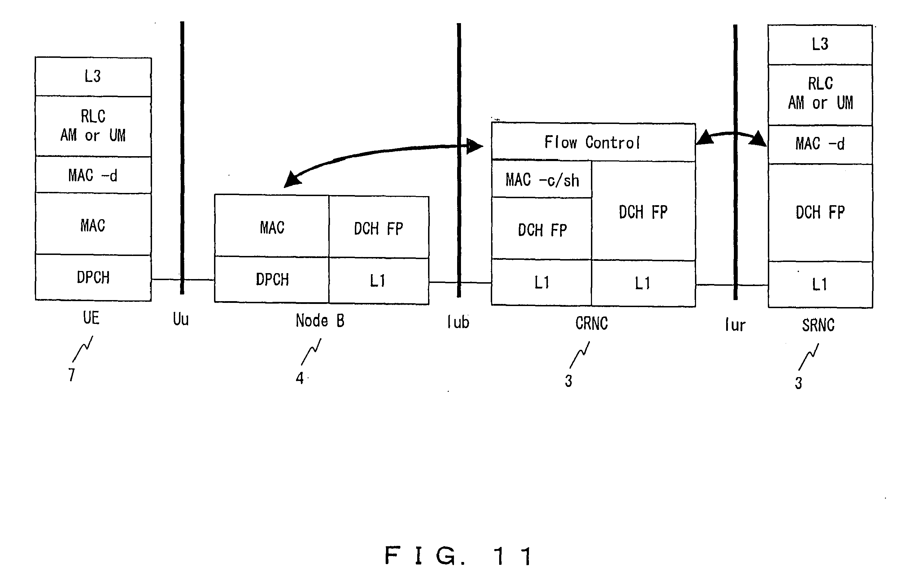

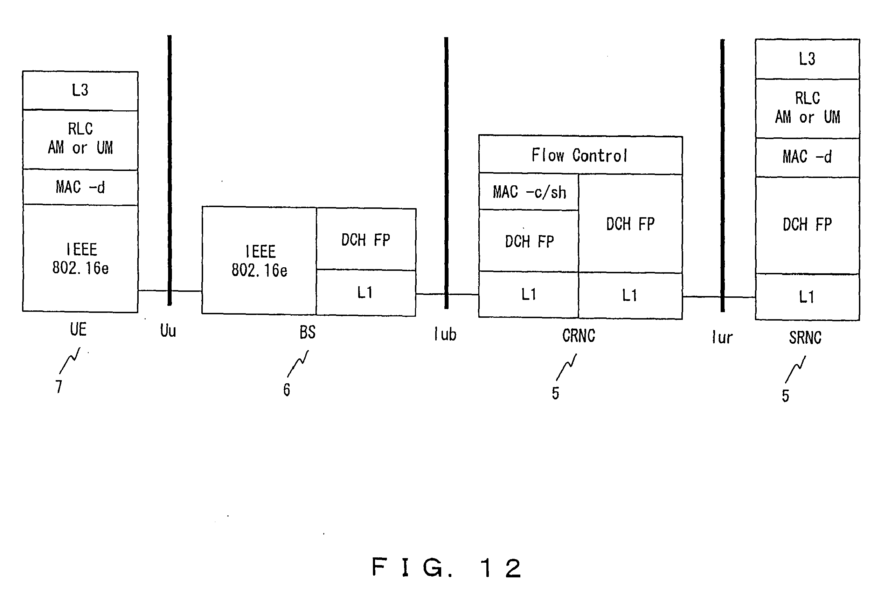

Fig. 9 explains the case of the radio base transceiver station (Node-B) 4 based on W-CDMA which employs HS-DSCH (High Speed Downlink Shared CHannel) in the downlink direction. Fig. 10 explains the case of the radio base station (BS) 6 for WiMAX which employs IEEE 802.16e. Fig. 11 explains the case of the radio base transceiver station (Node-B) 4 based on W-CDMA which employs DCH (Dedicated CHannel) in the uplink direction. Fig. 12 explains the case of the radio base station (BS) 6 for WiMAX which employs IEEE 802.16e in the uplink direction.

A C-Plane signal is transmitted by using the conventional W-CDMA signal in both of the uplink and downlink directions. Regarding the protocol conversion method in the case of the radio base station (BS) 6, the radio base station (BS) 6 for WiMAX receives an L1 message and a Frame Protocol, transfers them to the function unit which is compatible with WiMAX, and the L1 message and the Frame Protocol are transmitted to the radio communication terminal (UE) 7 side in WiMAX protocol (IEEE 802.16e) format.

The conversion method between the HS-DSCH signal and the WiMAX signal, and the conversion method between the DCH signal and the WiMAX signal which are necessary for the radio base station (BS) 6 for WiMAX, will be explained specifically.

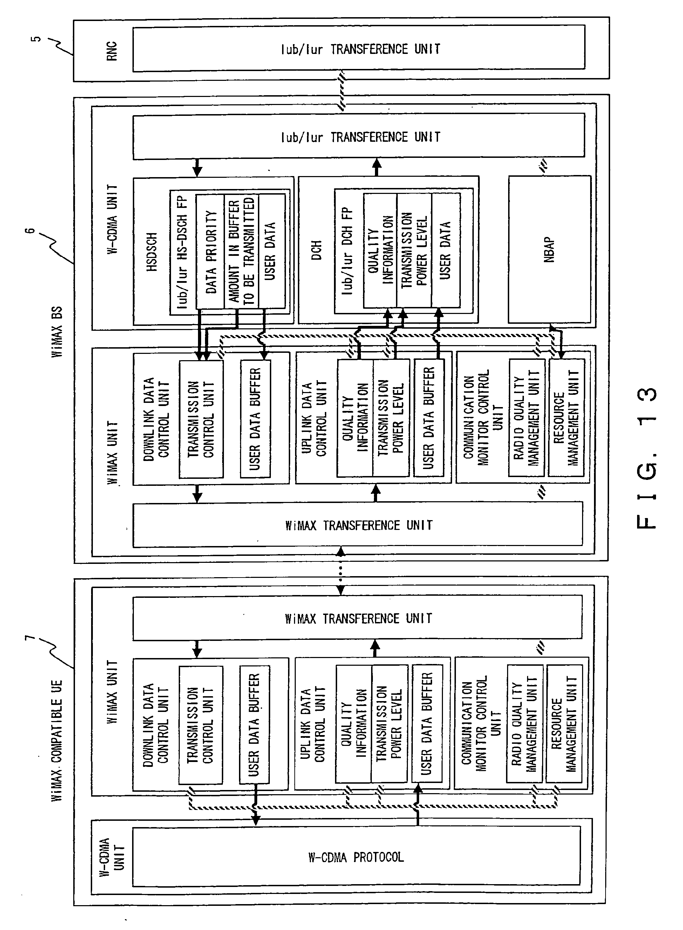

Fig. 13 is a block diagram for explaining the conversion between the HS-DSCH signal and the WiMAX signal, and the conversion between the DCH signal and the WiMAX signal.

First, the downlink signal (HS-DSCH) transmitted from the radio network controller (RNC) 5 is received by the HSDSH unit of the W-CDMA unit via an Iub/Iur transfer unit. The necessary information (in this case, data priority, amount to be transmitted in buffer and user data) is extracted from a HS-DSH FP (HS-DSCH Frame Protocol) in the signal, and the extracted information is transferred to a downlink data control unit in the WiMAX unit. Upon this, the information such as the data priority and the amount to be transmitted in buffer is transferred to a transmission control unit in the downlink data control unit. The user data is transmitted to the user data unit in the downlink data control unit and is stored therein.

Then, the downlink data control unit transfers to the radio communication terminal (UE) 7 the received data in the format of WiMAX. The radio communication terminal (UE) 7 executes the processes which have the function opposite to that of the processes executed by the radio base station (BS) 6 for WiMAX, and inputs the obtained user data to a W-CDMA protocol unit.

The WiMAX uplink signal is transmitted from the uplink data control unit to the DCH in the W-CDMA unit. Among the data of the signal, the information necessary for the DCH (in this case, quality information, transmission power level and user data) is extracted, and is transmitted to the radio network controller (RNC) 5 as DCH FP (DCH Frame Protocol). Upon this, the quality information is transmitted from a quality information unit in an uplink data control unit, the transmission power level is transmitted from a transmission power level unit in the uplink data control unit, and the user data is transmitted from a user buffer unit in the uplink data control unit.

The radio communication terminal (UE) 7 executes processes which have the function opposite to that in the above processes, and outputs the user data to the radio base station (BS) 6 for WiMAX, and the user data is transmitted in a format of WiMAX.

When a control signal of the radio base station (BS) 6 is transmitted from the radio network controller (RNC) 5 in a format of NBAP (Node B Application Part) signal of W-CDMA, an NBAP unit in the W-CDMA unit in the radio base station (BS) 6 for WiMAX receives the transmitted signal. If there is data which has to be transmitted to the WiMAX unit, the value indicating this fact is transmitted to a resource management unit in a communication monitor control unit. Based on this information, the resource management unit issues control instructions to a radio quality management unit in the communication monitor control unit, the quality information unit, the transmission power level unit in the uplink data control unit, and the transmission control unit in the downlink data control unit. Upon this, when a response (return value) is obtained from these units, the resource management unit returns the value to the NBAP unit.

Based on the value, the NBAP unit prepares a response of the NBAP unit for the radio network controller (RNC) 5, and transmits the answer to the radio network controller (RNC) 5. If there is no information related to the WiMAX unit, the NBAP unit in the W-CDMA unit automatically returns the corresponding value to the radio network controller (RNC) 5.

Next, the signal processing method in the NBAP unit will be explained.

The NBAP unit of the W-CDMA unit in the radio base station (BS) 6 transmits a response signal based on the NBAP to the radio network controller (RNC) 5 by using the return value which the NBAP unit requested from the WiMAX unit or the value which the NBAP unit itself acquired, regarding the signal based on the NBAP transmitted from the radio network controller (RNC) 5 as described above.

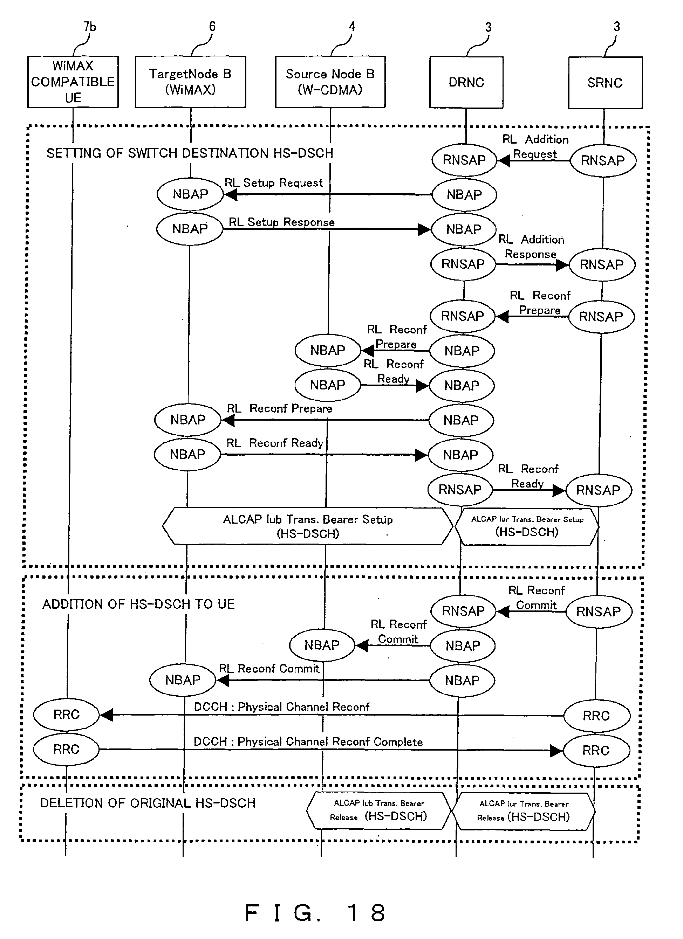

As an example, the method of data reception and response will be explained by using a RADIO LINK RECONFIGURATION PREPARE message and a RADIO LINK RECONFIGURATION READY message which is the response to the RADIO LINK RECONFIGURATION PREPARE message shown in a sequence figure (see Fig. 18) (described later).

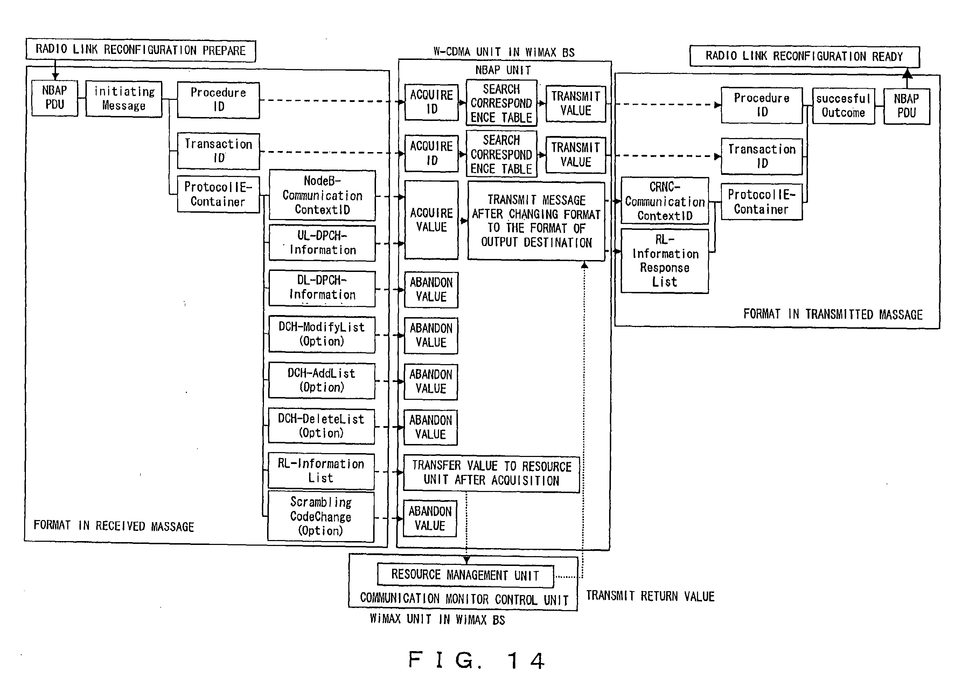

Fig. 14 shows elements extracted from the RADIO LINK RECONFIGURATION PREPARE message and the RADIO LINK RECONFIGURATION READY message which is the response to the RADIO LINK RECONFIGURATION PREPARE message (representative elements only are shown).

The processes from the conversion of the RADIO LINK RECONFIGURATION PREPARE message by the NBAP unit to making the response as the RADIO LINK RECONFIGURATION READY message are shown.

Among the elements in the received RADIO LINK RECONFIGURATION PREPARE message, ProcedureID corresponds to ProcedureID in the RADIO LINK RECONFIGURATION READY message as the response. Each value in the response message corresponds to its corresponding input value, and the table specifying the above correspondence is prepared and stored as a database by the NBAP unit in advance. When the ProcedureID in the RADIO LINK RECONFIGURATION PREPARE message is input, the above table specifying the correspondence is searched and the result is transmitted as the ProcedureID in the RADIO LINK RECONFIGURATION READY message. The same processes are executed regarding a TransactionID.

A Node B-Communication Context ID and a UL-DPCH-Information in the RADIO LINK RECONFIGURATION PREPARE message respectively correspond to a CRNC-Communication Context ID and an RL-InformationResponseList in the RADIO LINK RECONFIGURATION READY message as the response. However, different message formats are used for values, accordingly, the format is changed based on a return value from the resource management unit (described later) and the values are transmitted in a message format for the CRNC-CommunicationContextID and the RL-InformationResponseList.

Regarding the RL-InformationList in the RADIO LINK RECONFIGURATION PREPARE message, the corresponding value has to be transmitted to the resource management unit of the communication monitor control unit in the WiMAX unit of the radio base station (BS) 6, accordingly, the NBAP unit acquires the value and transmits the value to the resource management unit. The response from the resource management unit to the transmitted value is input in the above described portion in which the format is changed.

The RADIO LINK RECONFIGURATION PREPARE message as the response to the input values of a DL-DPCH-Information (Option), a DCH-ModifyList (Option), a DCH-AddList (Option), a DCH-DeleteList (Option) or a ScramblingCodeChange (Option) of the RADIO LINK RECONFIGURATION PREPARE message does not have to be prepared or transmitted to the WiMAX unit, accordingly, the data regarding these elements is abandoned in the NBAP unit upon reception.

Next, the method in which the mobile communication system recognizes the radio communication terminal (UE) 7 compatible with WiMAX will be explained.

When the radio communication terminal (UE) 7 moves from the HSDPA compatible area 40 based on W-CDMA to the WiMAX compatible area 60, the radio network controller (RNC) 5 has to discriminate between the radio communication terminal (UE) 7 which is compatible with WiMAX and the radio communication terminal (UE) which is incompatible with WiMAX.

Today, in order to discriminate whether or not the radio communication terminal (UE) 7 is compatible with HSDPA, the "HS-DSCH physical layer category" which is specified by 3GPP TS25.306 Ver.5.8.0 is used. This category is specified as an HS-PDSCH related capability in UE radio access capability communicated by RRC Connection Setup Complete. Herein, the discrimination by the radio network controller (RNC) 5 of whether or not the radio communication terminal (UE) 7 is WiMAX compatible is realized by interpreting the existing category in this "HS-DSCH physical layer category" as the element specifying the wireless communication terminal (UE) 7 which is compatible with WiMAX, or by specifying a new category as the category for the wireless communication terminal (UE) 7 which is compatible with WiMAX.

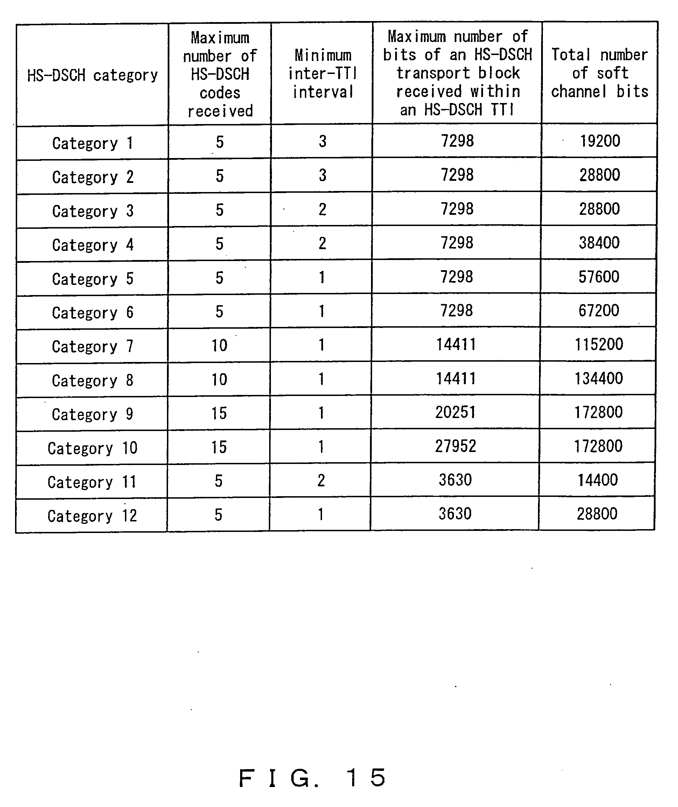

Fig. 15 shows the "HS-DSCH physical layer category" specified in 3GPP TS25.306 Ver.5.8.0.

Fig. 15 shows an excerpt from the 3GPP TS25.306 V5.8.0 (2004-03) Technical Specification.

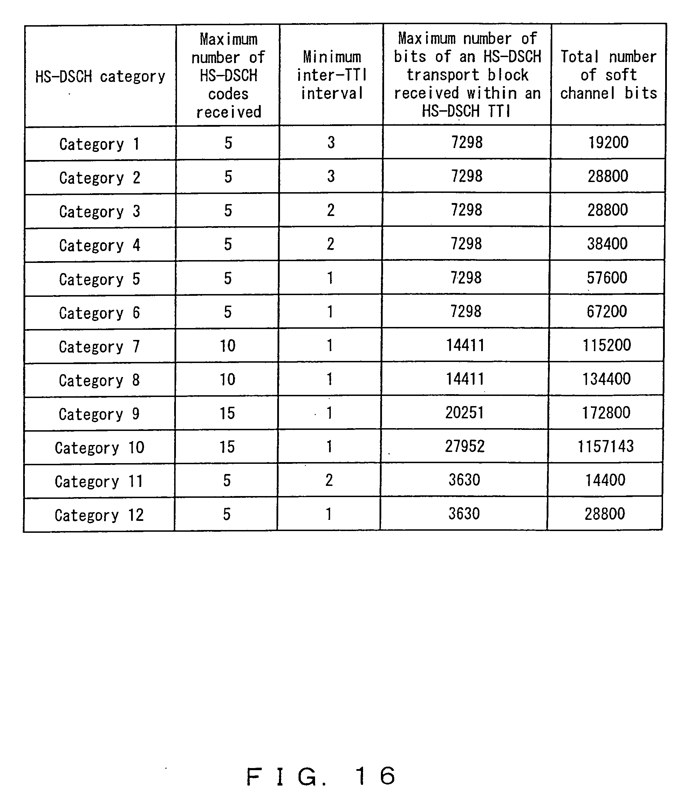

Fig. 16 is a table for the case when category 10 in the HS-DSCH physical layer category is set to a wireless communication terminal (UE) which is compatible with WiMAX.

The radio network controller (RNC) 5 can determine that the corresponding terminal is a radio communication terminal (UE) 7 which is compatible with WiMAX when receiving the category 10. Herein, for convenience, Total number of soft channel bits=1157143 is input in the category 10 which specifies the maximum rate of the WiMAX protocol i.e., 75Mbps. Additionally, the category 10 of Fig. 15 specifies the maximum rate i.e., 11.2Mbps.

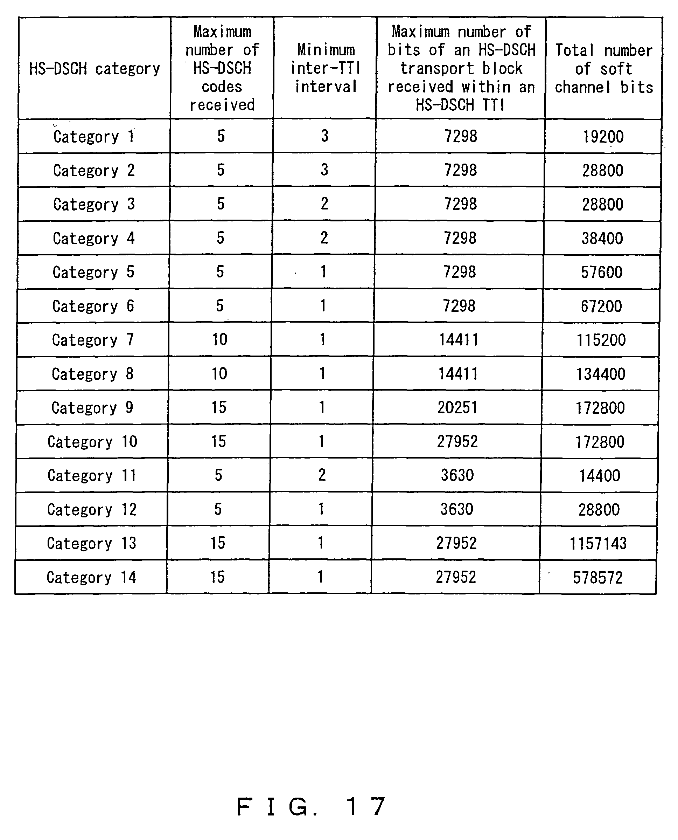

Fig. 17 is a table when category 13 and category 14 in the HS-DSCH physical layer category are newly set to a wireless communication terminal (UE) which is compatible with WiMAX.

The radio network controller (RNC) 5 can determine that the corresponding terminal is the radio communication terminal (UE) 7 which is compatible with WiMAX when receiving the category 13 or the category 14. The number of Categories to be added can be set to at least 1 in accordance with Variety of the data transference capability of the WiMAX to be specified. Herein, as examples, patterns are shown for Categories of 75Mbps as the maximum rate in the WiMAX protocol and of 37.5Mbps which is half of the maximum rate. For convenience, the Total number of soft channel bits=1157143 is input in the category 13 which specifies the maximum rate in the WiMAX protocol i.e., 75Mbps, and the Total number of soft channel bits=578572 is input in the category 14 which specifies half of the maximum rate in the WiMAX protocol i.e., 37.5Mbps. Additionally, the category 10 in Fig. 15 specifies the maximum rate i.e., 11.2Mbps.

Next, the method (2) will be explained, in which the radio communication terminal (UE) 7 which is compatible with WiMAX moves from the HSDPA compatible area 40 into the WiMAX compatible area 60 based on the W-CDMA system.

Fig. 18 shows a sequence to be followed when the radio communication terminal (UE) moves from the HSDPA compatible area into the WiMAX compatible area.

Setting is conducted in the radio base station (BS) 6 for WiMAX (Target NodeB (WiMAX) in Fig. 18) basically using an Inter-NodeB HS-DSCH Cell Change specified by 3GPP and using the same message as that specified by 3GPP.

Next, the method (3) will be explained, in which the radio communication terminal (UE) 7 which is compatible with WiMAX moves from the WiMAX compatible area 60 into the conventional HSDPA compatible area 40 based on the W-CDMA system.

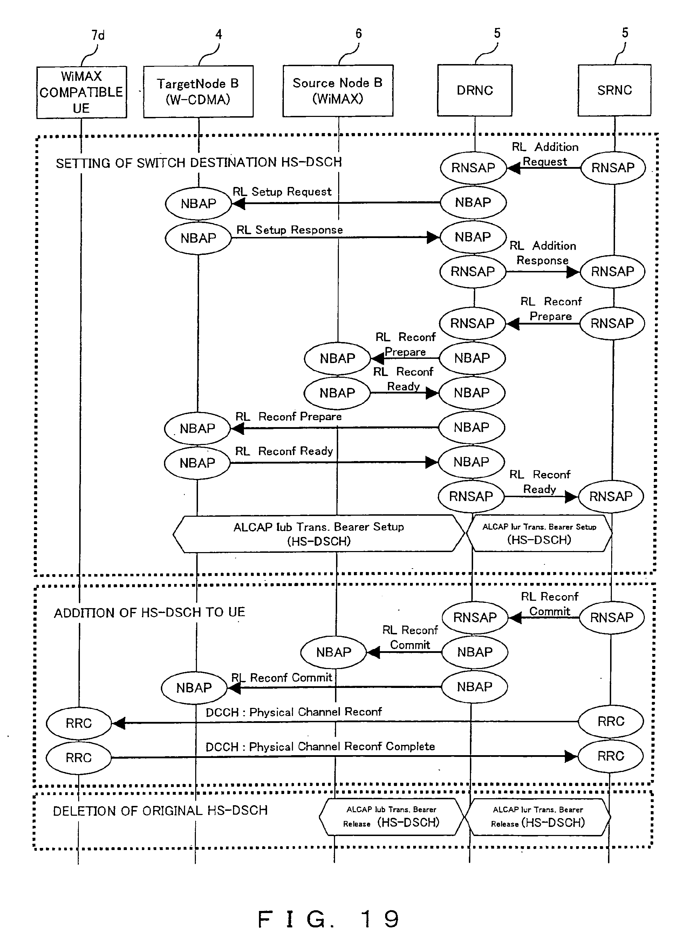

Fig. 19 shows a sequence to be followed when the radio communication terminal (UE) moves from the WiMAX compatible area into the HSDPA compatible area.

Setting is conducted in the radio base station (BS) 6 for WiMAX (Target NodeB (WiMAX) in Fig. 19) basically using an Inter-NodeB HS-DSCH Cell Change specified by 3GPP and using the same message as that specified by 3GPP.

Next, the method (4) will be explained, in which the radio communication terminal (UE) 7 which is compatible with WiMAX switches communication' methods from the DCH method to the HS-DSCH method in the WiMAX compatible area 60.

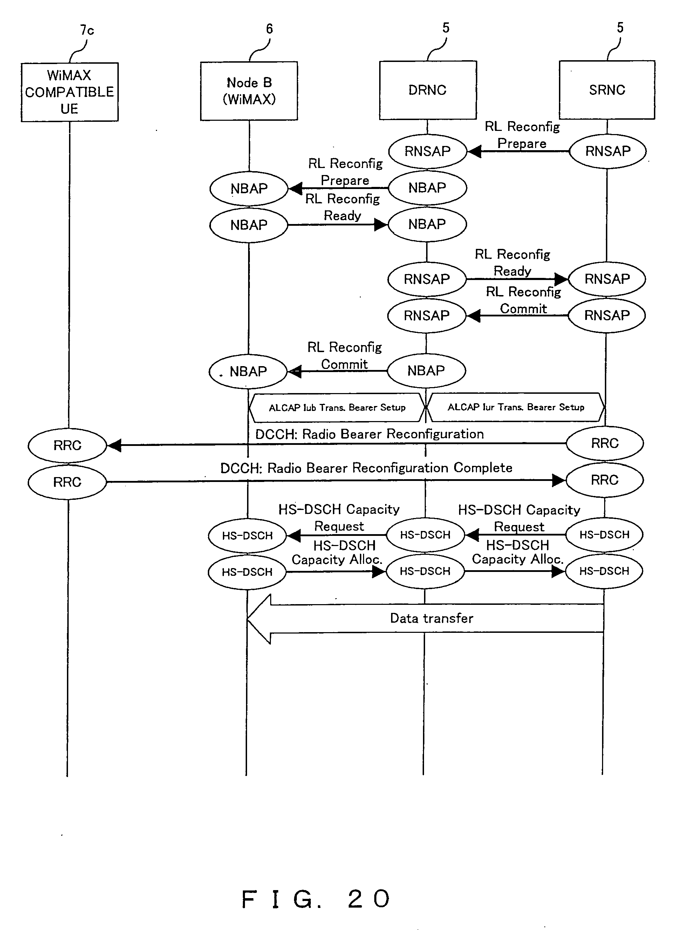

Fig. 20 shows a sequence to be followed when the radio communication terminal (UE) switches communication methods from the DCH method to the HS-DSCH method in the WiMAX compatible area.

Setting is conducted in the radio base station (BS) 6 for WiMAX (Target NodeB (WiMAX) in Fig. 20) basically using an HS-DSCH Setup specified by 3GPP.

The present invention is not limited to the above embodiments and various configurations and formations are permissible within the scope of the appended claims.

According to the present invention it is possible to reduce cost, divert the existing W-CDMA system maximally and realize the most efficient utilization of infrastructure resources, while maintaining quality of service at an acceptable level in HSDPA incompatible areas.

## Claims

1. A radio communication terminal (7) including first transmission/reception means (711) for transmitting and receiving first communication data which can be communicated by a first communication protocol, and communication data input/output means (73) for inputting and outputting the first communication data, further comprising:
second transmission/reception means (721) for transmitting and receiving second communication data which can be communicated by a second communication protocol different from the first communication protocol; and
protocol conversion means (723) for converting between the first communication data and the second communication data and vice-versa, wherein:
the communication data input/output means (73) is operable to output the first communication data which has been received by the second transmission/reception means (721) as the second communication data and has been converted from the second communication data into the first communication data by the protocol conversion means (723); and
the second transmission/reception means (721) is operable to transmit the second communication data which has been input to the communication data input/output means (73) as the first communication data and has been converted from the first communication data into the second communication data by the protocol conversion means (723).

2. The radio communication terminal (7) according to claim 1, wherein:
the first communication protocol is a communication protocol for HSDPA (High-Speed Downlink Packet Access); and
the second communication protocol is a communication protocol for WiMAX (Worldwide Interoperability for Microwave Access [IEEE 802.16a]).

3. A radio base transceiver station (6), comprising:
first user data transmission/reception means (61) for transmitting and receiving first communication data which can be communicated by a first communication protocol to/from a radio base transceiver station (4) which can perform communication by the first communication protocol;
second user data transmission/reception means (63) for transmitting and receiving second communication data which can be communicated by a second communication protocol different from the first communication protocol to/from a radio communication terminal (7) which can perform communication by the second communication protocol; and
protocol conversion means (62) for converting between the first communication data and the second communication data and vice-versa.

4. The radio base transceiver station (6) according to claim 3, wherein:
the first communication protocol is a communication protocol for HSDPA (High-Speed Downlink Packet Access); and
the second communication protocol is a communication protocol for WiMAX (Worldwide Interoperability for Microwave Access [IEEE 802.16a]).

5. A method of controlling communication which is employed by a radio communication terminal (7) including first transmission/reception means (711) for transmitting and receiving first communication data which can be communicated by a first communication protocol, and communication data input/output means (73) for inputting and outputting the first communication data, the method comprising:
receiving second communication data which can be communicated by a second communication protocol different from the first communication protocol;
converting the received second communication data into the first communication data; and
outputting the converted first communication data by the communication data input/output means (73).

6. A method of controlling communication which is employed by a radio communication terminal (7) including first transmission/reception means (711) for transmitting and receiving first communication data which can be communicated by a first communication protocol, and communication data input/output means (73) for inputting and outputting the first communication data, the method comprising:
inputting the first communication data by using the communication data input/output means (73);
converting the input first communication data into second communication data which can be communicated by a second communication protocol different from the first communication protocol; and
transmitting the converted second communication data.

7. A method of controlling communication which is employed by a radio base transceiver station (6) which can communicate, by a first communication protocol, first communication data which can be communicated by the first communication protocol, the method comprising:
receiving the first communication data from a radio base transceiver station (4);
converting the received first communication data into second communication data which can be communicated by a second communication protocol different from the first communication protocol; and
transmitting the converted second communication data to a radio communication terminal (7) which can perform communication by the second communication protocol.

8. A method of controlling communication which is employed by a radio base transceiver station (6) which can communicate, by a first communication protocol, first communication data which can be communicated by the first communication protocol, the method comprising:
receiving second communication data which can be communicated by a second communication protocol different from the first communication protocol from a radio communication terminal (7) which can perform communication by the second communication protocol;
converting the received second communication data into the first communication data; and
transmitting the converted first communication data to a radio base transceiver station (4) which can perform communication by the first communication protocol.

9. A computer executable program product storing a program containing program code for causing a radio communication terminal (7) including first transmission/reception means (711) for transmitting and receiving first communication data which can be communicated by a first communication protocol, and communication data input/output means (73) for inputting and outputting the first communication data, to execute:
a step of receiving second communication data which can be communicated by a second communication protocol different from the first communication protocol;
a step of converting the received second communication data into the first communication data; and
a step of outputting the converted first communication data by the communication data input/output means (73).

10. A computer executable program product storing a program containing program code for causing a radio communication terminal (7) including first transmission/reception means (711) for transmitting and receiving first communication data which can be communicated by a first communication protocol, and communication data input/output means (73) for inputting and outputting the first communication data, to execute:
a step of inputting the first communication data by using the communication data input/output means (73);
a step of converting the input first communication data into second communication data which can be communicated by a second communication protocol different from the first communication protocol; and
a step of transmitting the converted second communication data.

11. A computer executable program product storing a program containing program code for causing a radio base transceiver station (6) which can communicate, by a first communication protocol, first communication data which can be communicated by the first communication protocol, to execute:
a step of receiving first communication data from a radio base transceiver station (4);
a step of converting the received first communication data into second communication data which can be communicated by a second communication protocol different from the first communication protocol; and
a step of transmitting the converted second communication data to a radio communication terminal (7) which can perform communication by the second communication protocol.

12. A computer executable program product storing a program containing program code for causing a radio base transceiver station (6) which can communicate, by a first communication protocol, first communication data which can be communicated by the first communication protocol, to execute:
a step of receiving second communication data which can be communicated by a second communication protocol different from the first communication protocol from a radio communication terminal (7) which can perform communication by the second communication protocol;
a step of converting the received second communication data into the first communication data; and
a step of transmitting the converted first communication data to a radio base transceiver station (4) which can perform communication by the first communication protocol.
